## Europäisches Patentamt

## European Patent Office

## Office européen des brevets

(11) Veröffentlichungsnummer· **0 035 252**
**B1**

(12) EUROPÄISCHE PATENTSCHRIFT

(45) Veröffentlichungstag der Patentschrift:
**31.10.84**

(51) Int. Cl.³: **G 05 G 5/02**, G 05 G 19/00

(21) Anmeldenummer: **81101436.4**

(22) Anmeldetag: **27.02.81**

(54) Gangschaltung für ein mit Fremdkraft betätigtes Getriebe.

(30) Priorität: **01.03.80 DE 3007953**

(43) Veröffentlichungstag der Anmeldung:
**09.09.81 Patentblatt 81/36**

(45) Bekanntmachung des Hinweises auf die Patenterteilung:
**31.10.84 Patentblatt 84/44**

(84) Benannte Vertragsstaaten:
**DE FR GB IT SE**

(56) Entgegenhaltungen:
**DE - A - 1 938 570**
**DE - A - 2 262 034**
**DE - A - 2 427 433**
**US - A - 2 724 822**
**US - A - 3 602 061**

(73) Patentinhaber: **WABCO Westinghouse Fahrzeugbremsen GmbH, Am Lindener Hafen 21 Postfach 91 12 80, D-3000 Hannover 91 (DE)**

(72) Erfinder: **Reinecke, Erich, Ing. grad., Kastanieneck 6, D-3167 Burgdorf (DE)**
Erfinder: **Klatt, Alfred, Ing. grad., Dannhorstweg 2, D-3101 Wathlingen (DE)**

(74) Vertreter: **Schrödter, Manfred, WABCO Westinghouse Fahrzeugbremsen GmbH Am Lindener Hafen 21 Postfach 91 12 80, D-3000 Hannover 91 (DE)**

**Beschreibung**

Die Erfindung bezieht sich auf eine Gangschaltung für ein mit Fremdkraft betätigtes Getriebe mit einem vom Fahrer bedienten Schalthebel, der zumindestens eine Leerlaufposition und für jeden einzelnen Gang eine Endposition aufweist.

Bei Fahrzeugen, die mit Getrieben ausgerüstet sind, welche mit Fremdkraft betätigt werden (Servo-Getriebe), ist der Schalthebel nicht mechanisch mit dem Getriebe verbunden. Durch den Schalthebel wird üblicherweise ein Ventil betätigt, welches z. B. über Druckluftleitungen mit dem Getriebe verbunden ist und bei einem Schaltvorgang Arbeitszylinder zum Einlegen der gewünschten Gänge steuert. Für den Fahrer ist es deshalb nicht möglich, wie bei einem konventionellen Getriebe, durch den Widerstand des Schalthebels zu erkennen, wann die Gangschaltung vollzogen ist.

Dieses ist jedoch auch bei mit Fremdkraft betätigten Getrieben unbedingt notwendig, da der Fahrer erst nach erfolgter Gangumschaltung wieder einkuppeln und Gas geben darf.

Zur Lösung dieses Problems ist es denkbar, die vollzogene Gangumschaltung z. B. durch eine im Amaturenbrett angebrachte Signallampe oder durch einen Signalton anzuzeigen. Diese Lösung hat jedoch den Nachteil, die Aufmerksamkeit des Fahrers zu sehr zu beanspruchen.

Aufgabe der Erfindung ist es, eine einfache Vorrichtung anzugeben, durch die dem Fahrer ein Vollzug der Gangumschaltung gemeldet wird, ohne den Fahrer vom Verkehrsgeschehen abzulenken.

Diese Aufgabe wird durch die im Patentanspruch angegebene Erfindung gelöst.

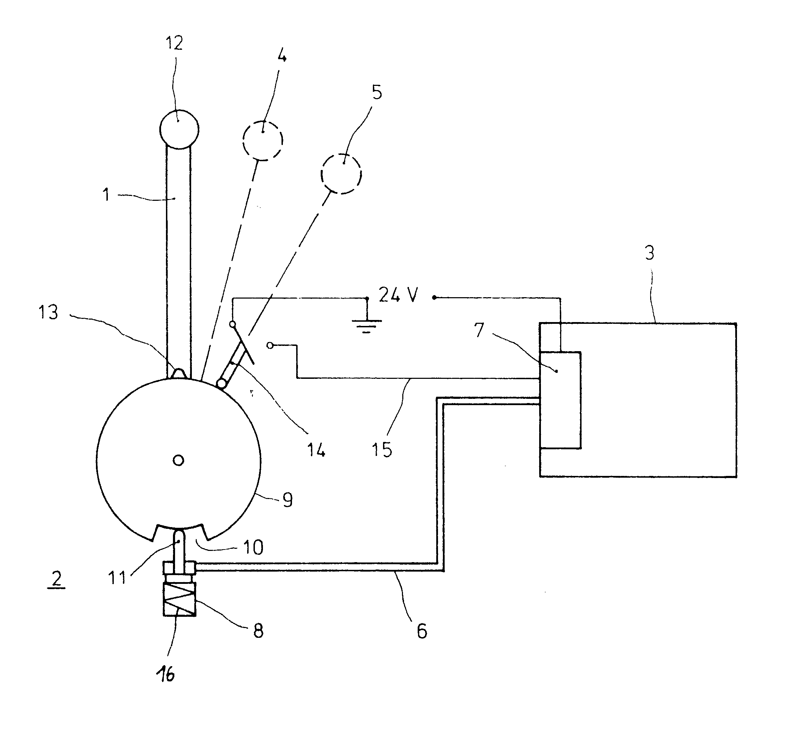

In der Zeichnung ist ein Ausführungsbeispiel der Erfindung angegeben.

Es sind schematisch ein Schalthebel 1 und das mit dem Schalthebel zu bedienende Getriebe 3 eines Fahrzeuges dargestellt. Am Fuß des Schalthebels 1 befindet sich eine Sperrvorrichtung 2. Diese besteht aus einer Kulissenscheibe 9 mit einer Ausnehmung 10. In diese Ausnehmung 10 greift ein Sperrstift 11 eines Sperrzylinders 8 ein, wenn dieser ausgefahren ist. Der Zylinderraum des Sperrzylinders 8 ist über eine Signalleitung 6, die als Druckmittelleitung ausgebildet ist, mit einer im Getriebe 3 vorgesehenen Freigabevorrichtung 7 verbunden. Die Freigabevorrichtung 7, die nicht genauer dargestellt ist, kann z. B. ein Magnetventil sein, welches nach vollzogener Gangschaltung des Getriebes 3 betätigt wird und die Signalleitung 6 an einen Druckluftvorrat anschließt.

Die in der Zeichnung schematisch dargestellte Gangschaltung funktioniert wie folgt:

Ausgehend von einer Ruheposition 12 (Leerlaufposition) wird der Schalthebel 1 vom Fahrer bei einer Gangumschaltung in Richtung auf die Endposition 5 bewegt. Der Schalthebel 1 läßt sich jedoch zunächst nur in einer Sperrposition 4 bewegen, da in dieser Position der ausgefahrene Sperrstift 11 an die rechte Kante der Ausnehmung 10 anstößt. In dieser Position wird über weitere Kulissen der Kulissenscheibe 9 (nicht dargestellt) der Gangzylinder am Getriebe 3 geschaltet. Ist der Umschaltvorgang des Getriebes abgeschlossen, wird durch (nicht dargestellte Mittel die Freigabevorrichtung 7 betätigt. Hierdurch gelangt ein Druckmittel in die Signalleitung 6, wodurch der Sperrstift 11 gegen die Kraft einer Feder 16 nach unten bewegt wird und somit die Sperrung des Schalthebels 1 aufgehoben wird. Der vom Fahrer weiterhin mit Kraft beaufschlagte Schalthebel 1 läßt sich nun in die Endposition 5 bewegen. Diese Bewegung wird vom Fahrer ohne weiteres registriert, ohne seine Aufmerksamkeit vom Verkehrsgeschehen abzulenken.

Beim Zurückschalten in die Leerlaufstellung wird die Signalleitung 6 wieder entlüftet, so daß der Sperrstift 11 wieder in die Ausnehmung 10 eindringt.

Gemäß einer Weiterbildung der Erfindung ist an der Kulissenscheibe 9 ein Nocken 13 angebracht. Durch diesen Nocken wird in der Endposition 5 ein Schalter 14 betätigt. Dieser gibt über eine Leitung 15 ein Signal an die Freigabevorrichtung 7, welches bewirkt, daß die Signalleitung 6 sofort entlüftet wird. Hierdurch ist gewährleistet, daß auch bei einem schnellen Durchreißen der Gänge der Sperrstift 11 durch die Kraft der Feder 16 in die Ausnehmung 10 eindringen kann.

Die Sperrvorrichtung 2 kann auch so ausgebildet werden, daß anstelle des Sperrzylinders 8 ein Arbeitsmagnet verwendet wird. Dies ermöglicht eine einfache Ausbildung der Signalleitung 6 als elektrische Leitung.

**Patentansprüche**

1. Gangschaltung für ein mit Fremdkraft betätigtes Getriebe mit einem vom Fahrer bedienten Schalthebel (1), der zumindestens eine Leerlaufposition (12) und für jeden einzelnen Gang eine Endposition (5) aufweist, gekennzeichnet durch:

a)  eine am Schalthebel (1) angreifende und über eine Signalleitung (6) mit dem Getriebe (3) verbundene Sperrvorrichtung (2), die im Sperrzustand dem Schalthebel (1) eine Bewegung aus der Leerlaufposition (12) in eine von der Endposition (5) abweichende Sperrposition (4) ermöglicht;

b)  eine im Getriebe (3) vorgesehene Freigabevorrichtung (7) die bei vollzogener Gangumschaltung über die Signalleitung (6) die Sperrvorrichtung (2) freigibt und eine Weiterbewegung des Schalthebels (1) aus der Sperrposition (4) in die Endposition (5) ermöglicht.

2. Gangschaltung nach Anspruch 1, dadurch gekennzeichnet, daß die Sperrvorrichtung (2) aus einem druckmittelbetätigten Sperrzylinder (8) besteht, an dessen Kolben ein Sperrstift (11) befestigt ist, welcher im Sperrzustand in eine Ausnehmung (10) einer am Schalthebel (1) angebrachten Kulissenscheibe (9) eingreift.

3. Gangschaltung nach Anspruch 1 bis 2, dadurch gekennzeichnet, daß die Signalleitung (6) eine Druckmittelleitung zur Betätigung des Sperrzylinders (8) ist.

4. Gangschaltung nach Anspruch 1, dadurch gekennzeichnet, daß die Sperrvorrichtung (2) nach der Freigabe durch die Freigabevorrichtung (7) durch ein vom Schalthebel (1) betätigtes Schaltmittel wieder aktivierbar ist.

5. Gangschaltung nach Anspruch 1 bis 4, dadurch gekennzeichnet, daß an der Kulissenscheibe (9) ein Nocken (13) angebracht ist, durch welchen ein Schalter (14) betätigt wird, und die Signalleitung (6) durch einen Befehl des Schalters (14) entlüftbar ist.

6. Gangschaltung nach Anspruch 1, dadurch gekennzeichnet, daß die Sperrvorrichtung (2) ein Arbeitsmagnet ist, der von einer elektrischen Signalleitung (6) steuerbar ist.

## Claims

1. Gear shift for a power-actuated transmission having a gear lever (1) which is operated by the driver, and has at least one neutral position (12) and for each individual gear one end position (5), characterised by

a) a lock device (2) which acts on the gear lever (1) and is connected via a signal line (6) to the transmission (3) and which, in the lock condition, permits the gear lever (1) to be moved from the neutral position (12) into a locked position (4) different from the end position (5);

b) a relaease device (7), provided in the transmission (3), which, when the gear change is completed, releases the lock device (2) by way of the signal line (6) and enables the gear lever (1) to be moved on from the locked position (4) into the end position (5).

2. Gear shift according to claim 1, characterised in that the lock device (2) comprises a locking cylinder (8) operated by a pressure medium, to the piston of which cylinder a locking pin (11) is fastened which in the lock condition engages a recess (10) in a gate plate (9) attached to the gear lever (1).

3. Gear shift according to claim 1 or 2, characterised in that the signal line (6) is a pressure-medium line for actuating the locking cylinder (8).

4. Gear shift according to claim 1, characterised in that once it has been released by the release device (7), the lock device (2) can be actuated again by switching means operated by the gear lever (1).

5. Gear shift according to claims 1 to 4, characterised in that a cam (13) is attached to the gate plate (9), by means of which a switch (14) is actuated and the signal line (6) can be evacuated as a result of a command from the switch (14).

6. Gear shift according to claim 1, characterised in that the lock device (2) is an operational magnet which can be controlled by an electrical signal line (6).

## Revendications

1. Changement de vitesse pour une boîte de vitesses comandée par une force auxiliaire, comprenant un levier de vitesses (1) manoeuvré par le conducteur, qui présente une position de point mort (12) et, une position extrême (5) pour chaque vitesse, caractérisé par:

a) un dispositif d'arrêt (2), qui attaque le levier de vitesses (1) et est relié à la boîte de vitesses (3) par l'intermédiaire d'une canalisation de signaux (6) et qui, cans l'état d'arrêt, permet au levier de vitesses (1) de se déplacer de la position de point mort (12) à une position d'arrêt (4) qui est différente de la position extrême (5);

b) un dispositif de dégagement (7), prévu dans la boîte de vitesses (3) et qui, lorsque le changement de vitesse est exécuté, dégage le dispositif d'arrêt (2) par l'intermédiaire d'une canalisation de signaux (6) et permet de continuer à déplacer le levier de vitesses (1) pour le faire passer de la position d'arrêt (4) à la position extrême (5).

2. Changement de vitesse selon la revendication 1, caractérisé en ce que le dispositif d'arrêt (2) est constitué par un cylindre d'arrêt (8) actionné par un fluide sous pression, au piston duquel est fixé un doigt d'arrêt (11) qui s'engage dans une échancrure (10) d'un disque à coulisse (9) fixé au levier de vitesses (1) dans l'état d'arrêt.

3. Changement de vitesse selon la revendication 1 ou 2, caractérisé en ce que la canalisation de signaux (6) est une conduite de fluide sous pression destinée à actionner le vérin d'arrêt (8).

4. Changement de vitesse selon la revendication 1, caractérisé en ce que, après avoir été dégagé par le dispositif de dégagement (7), le dispositif d'arrêt (2) peut à nouveau être activé par un moyen de commutation actionné par le levier de vitesses (1).

5. Changement de vitesse selon les revendications 1 à 4, caractérisé en ce que, sur le disque à coulisse (9), est montée une came (13) qui acitonne un interrupteur (14) et en ce que la canalisation de signaux (6) peut être mise à l'air libre par un ordre de l'interrupteur (14).

6. Changement de vitesse selon la revendication 1, caractérisé en ce que le dispositif d'arrêt (2) est un électro-aimant de travail qui peut être commandé par une canalisation de signaux électriques (6).